# EUROPÄISCHE PATENTSCHRIFT

(11) **EP 0 928 557 B1**
(45) Veröffentlichungstag und Bekanntmachung des Hinweises auf die Patenterteilung: **09.04.2003**
(21) Anmeldenummer: 99100450.8
(22) Anmeldetag: 11.01.1999
(51) Int. Cl.: A01K 1/015

(54) **Bodenmatte für einen Viehstall**
Floor mat for a cattle stable
Tapis de sol pour étable

(30) Priorität: 13.01.1998 DE 19800945
(43) Veröffentlichungstag der Anmeldung: 14.07.1999
(73) Patentinhaber: Gummiwerk Kraiburg Elastik GmbH, 84529 Tittmoning (DE)
(72) Erfinder: Klinger, Martin Dipl.-Ing. (FH), 84489 Burghausen (DE)
(74) Vertreter: Ruttensperger, Bernhard, Dipl.-Phys.

(56) Entgegenhaltungen:
- EP-A- 0 117 707
- DE-U- 29 506 734

## Beschreibung

Die Erfindung betrifft eine gummielastische Bodenmatte für einen Viehstall, insbesondere für Milchkuh-Liegeboxen bei strohloser Stallhaltung, bei der das Vieh nicht unmittelbar mit Stroh in Kontakt kommt.

Aus der DE 295 06 734 U1 ist eine solche Gummimatte bekannt, welche eine obere, härtere Schicht als Standfläche für das Vieh, sowie eine untere, weichere Stützlagenschicht aus Schaumstoff aufweist. Die Matte wird auf dem Stallboden mittels separater Klemmleisten befestigt, welche die Seitenwände der Matten der Länge nach übergreifen. Die Klemmleisten haben noch eine weitere Funktion, nämlich als Schutzabdeckung der ansonsten offenen Seitenränder der Schaumstoffschicht, etwa gegen Vernässung. Das Verlegen und Befestigen der Klemmleisten am Stallboden ist aufwendig.

Zur Lösung dieses Problems ist bei der erfindungsgemäßen Bodenmatte entlang zumindest einem der Seitenränder der Matte eine nach unten weisende Steganordnung einstückig angeformt oder fest angebracht. Die Steganordnung begrenzt seitlich einen unter der Matte befindlichen, im wesentlichen flächig durchgehenden, nach unten offenen Hohlraum. Die Steganordnungen können auch als separate Teile an der Matte befestigt sein, etwa durch nieten, kleben oder anvulkanisieren.

Die einstückig angeformten Steganordnungen dichten den darunter befindlichen Hohlraum, der mit weichem Material, wie etwa Schaumstoff befüllbar ist, seitlich ab und verhindern so, daß von der Seite her etwa Wasser in den Hohlraum eindringt und über die Zeit Fäulnis entsteht. Zur Abdichtung der Seitenränder sind keine aufwendig zu montierenden Klemmleisten erforderlich.

Bevorzugt weist die Steganordnung mehrere, nebeneinander entlang dem zumindest einen Seitenrand verlaufende Stegunteranordnungen auf.

Damit das Vieh die Matte vom harten Stallboden her leichter betreten kann, kann die vertikale Druckstabilität der Stegunteranordnungen vom zugehörigen Seitenrand der Matte ausgehend stetig oder gestuft abnehmen.

Bevorzugt belegen dann die dem Seitenrand näheren Stegunteranordnungen einen größeren Flächenanteil der Matte als die vom Seitenrand ferneren Stegunteranordnungen.

Die Steganordnung kann als Labyrinthdichtung ausgeführt sein, wobei die Stegunteranordnungen jeweils in eine Vielzahl auf einer Linie mit Abstand voneinander angeordnete Füße unterteilt sein können, die bevorzugt zu den Füßen der benachbarten Reihe in Reihenlängsrichtung zueinander versetzt sind. Bevorzugt überlappen die zueinander versetzten Füße benachbarter Reihen vom Seitenrand der Matte betrachtet einander zumindest teilweise. Man erreicht hierdurch eine ausreichende Abdichtung gegen Spritzwasser bei der Stallreinigung, wobei aber eventuell eingetretenes Sickerwasser zwischen den Füßen abfließen kann und somit der Hohlraum gelüftet wird. Diese Art der Steganordnungen wird bevorzugt nur am tiefer gelegenen Rand einer Matte vorgesehen, die auf einem ein Gefälle aufweisenden Stallboden aufliegt, also etwa nahe einem Schlitzbodenbereich des Stalls zum Ableiten von Ausscheidungen des Viehs und Reinigungswasser.

Insbesondere an den verbleibenden Seitenrändern der Matte können die Steganordnungen jeweils als durchgehende Rippe ausgebildet sein.

Die Matte ist bevorzugt rechteckig zum Auslegen einer Liege-Stallbox für ein Stück Vieh, etwa einer Milchkuh, bemessen. In einer Boxreihe können eine Vielzahl solcher Matten fugenlos aneinanderliegen. Damit bei vertikaler Belastung der Matte die aneinander liegenden Rippen benachbarter Matten nicht auseinanderweichen und kein Schmutz eintritt, sind bevorzugte Rippen an ihrer vom Hohlraum abgelegenen Seite von oben gesehen hinterschnitten. Tritt das Vieh nahe dem Seitenrand auf die Matte, kann die Rippe unten seitlich zur benachbarten Matte hin ausweichen, ohne daß sich an der Mattenoberfläche ein Spalt bildet.

Bevorzugt trägt die Bodenmatte an allen ihren Seitenrändern die Steganordnungen, um den darunter gebildeten Hohlraum allseits seitlich zu umrahmen. Eine solche Matte ist unabhängig vom Vorhandensein benachbarter Matten verlegbar, wobei dann der Hohlraum ringsum dicht abgeschlossen ist.

Um zu verhindern, daß sich die Matte bei längerer Benutzung irreversibel dehnt und etwa die Seitenränder ungrade werden, kann die Unterfläche der Bodenmatte zwischen den Steganordnungen entgegengesetzter Seitenränder der Bodenmatte verlaufende Verstärkungsrippen tragen.

Um den Hohlraum unter der Matte durchgängig zu halten, können die Verstärkungsrippen weniger weit von der Unterfläche der Bodenmatte abstehen als die Steganordnung.

Es genügt, wenn die Bodenmatte nahe ihrem im Stallbodengefälle oben anzuordnenden Rand Mittel zum Befestigen am Stallboden aufweist. Weitere allseitige Befestigungsmittel, wie etwa die eingangs genannten herkömmlichen Klemmleisten, sind nicht erforderlich, da die Steganordnungen die Dichtfunktion bereits übernehmen. Eine einseitige Befestigung der Matte ermöglicht eine freie Dehnung der Matte zur nicht befestigten Mattenseite hin, ohne daß die Matte wellig wird.

Bevorzugt ist die Bodenmatte einstückig unter Verwendung von Altgummimaterial hergestellt, bevorzugt unter Zugabe von Rohgummimaterial.

Der Hohlraum kann mit weichem Material aufgefüllt sein, etwa mit einer offenporigen Schaumstoffschicht. Die Schaumstoffschicht läßt sich als separate Platte lose auf den Stallboden legen und dann die Matte darüber, so daß die Steganordnungen die Schaumstoffplatte bevorzugt allseits passend umrahmen und sie hierdurch positioniert halten. Da die Schaumstoffplatte in der Regel schneller verschleißt als die Gummimatte, kann die Schaumstoffplatte problemlos ausgetauscht werden, etwa auch gegen Stroh. Hierzu braucht man nur die Matte an der nicht befestigten Seite hochzuheben und die Schaumstoffmatte auszutauschen. Ein vollständiges Ablösen der Matte ist nicht erforderlich, wenn die Matte nur etwa längs einem Seitenrand am Boden befestigt ist.

Die Schaumstoffplatte kann ganz oder vollständig mit einer aus dem Schaumstoffmaterial selbst gebildeten Haut oder einer separaten Folie umhüllt sein. Die Schaumstoffplatte ist bevorzugt aus mit Bindemittel, etwa Polyurethankleber, verpreßten Altschaumstoffflocken hergestellt.

Um eine satte Auflage der Matte auf der Schaumstoffplatte bei gleichzeitiger sicherer Abdichtung der Seitenwände zu ermöglichen, kann die Schaumstoffplatte im entspannten Zustand höher sein als der Betrag, um den die Steganordnungen von der Unterfläche der Bodenmatte abstehen.

Ein bevorzugtes Ausführungsbeispiel der Erfindung wird nun anhand der beigefügten Zeichnungen erläutert.
- Fig. 1: zeigt eine Draufsicht auf eine Bodenmatte zum Auslegen einer Stallbox;
- Fig. 2: zeigt eine Schnittansicht der Bodenplatte entlang Linie A-A in Fig. 1;
- Fig. 3: zeigt eine Schnittansicht durch den Längsrand der Bodenmatte entlang Linie B-B in Fig. 1, mit anliegender zweiter Bodenmatte;
- Fig. 4: zeigt eine Schnittansicht ähnlich Fig. 2 in vergrößertem Maßstab;
- Fig. 5: zeigt eine Schnittansicht ähnlich Fig. 3 in vergrößertem Maßstab und
- Fig. 6: zeigt einen Längsschnitt durch eine Stallbox mit Seitenbegrenzungsbügel und aufliegender Bodenmatte.

Eine in Draufsicht rechteckige Gummibodenmatte 1 umfaßt eine Deckplatte 3 und, von deren Seitenrändern R₁-R₄ nach unten einstückig abstehend angeformt, Steganordnungen.

Die Steganordnungen der Rechtecklängsränder R₁,R₂ sind als ununterbrochene Rippen 5,7 ausgebildet, deren Außenflächen, wie in Fig. 5 zu erkennen, von oben gesehen mit einem Winkel α schräg hinterschnitten sind. Die Unterflächen der Rippen 5,7 sind mit einem Winkel β nach außen und oben abgeschrägt.

An der einen Rechteckschmalseite R₃, in dem Bodengefälle γ der Stallbox oben, d.h. kopfseitig zu liegen kommt, sind mit Abstand parallel verlaufende Rippen 9,11 vorgesehen, die durch Querstege 13 miteinander zu einem Gitter verbunden sind. Zwischen den Rippen 9,11 sind verteilt 3 Befestigungslöcher 15 vorgesehen, zum Einsetzen von Bolzen zur Befestigung der Matte auf dem Stallboden.

An der anderen Rechteckschmalseite R₄ der Matte 1, die am tiefer gelegenen Schwanzende der Stallbox zu liegen kommt, d.h. nahe dem in Fig. 6 schematisch dargestellten Schlitzboden 17 zum Ableiten von Gülle in eine darunter verlaufende Ableitrinne 18, ist die Steganordnung aus einer Vielzahl voneinander getrennter Füße 19,21 zusammengesetzt, die in mehreren parallelen Reihen labyrinthartig zueinander längsversetzt hintereinander angeordnet sind. Die Füße 19 der 3 randnahen Reihen sind in Draufsicht oval, und die Füße 21 der dahinter liegenden 3 Reihen sind in Draufsicht kreisrund, mit gleichem Krümmungsradius wie die erstgenannten ovalen Füße 19. Alle Füße 19 und 21 sind nach unten konisch verjüngt. Der Abstand zwischen den kreisrunden Füßen 21 ist größer als der zwischen den ovalen Füßen 19, so daß die Matte insgesamt randnah schwerer zusammendrückbar ist als randfern. Randfern der innersten Fußreihe 21 verläuft noch eine mehrfach unterbrochene Rippe 23, die bei unbelasteter Matte jedoch nicht auf dem Stallboden aufliegt. Die Füße 19,21 bilden als Labyrinthdichtung einen Schutz gegen von außen eindringendes Spritzwasser, ermöglichen jedoch das Abfließen von Sickerwasser nach außen in den zwischen den Füßen 19,21 freigelassenen Kanälen des Labyrinths.

Entsprechende Ablaufkanäle können auch im Stallboden selbst vorgesehen sein.

Die Deckplatte 1 und die Rippen 5,7,11 sowie die Füße 19,21 bilden einen flachen Kasten, der einen durchgehenden, nach unten offenen Hohlraum 25 begrenzt.

Zwischen den Rippen 5,7 erstrecken sich flache, durchgehende Verstärkungsrippen 27, die eine irreversible Dehnung der Matte über längere Gebrauchsdauer verhindern.

Vor der Verlegung der Matte 1 wird auf den Stallboden 30 eine Schaumstoffmatte 31 gelegt, in Fig. 6 gepunktet angedeutet, und auf diese dann die Gummimatte 1, deren Steganordnungen die Schaumstoffplatte 31 passend umschließen. Sodann wird die Gummimatte 1 am höher gelegenen Ende der Stallbox mittels in die Bolzenlöcher 15 eingesetzter Bolzen 33 befestigt.

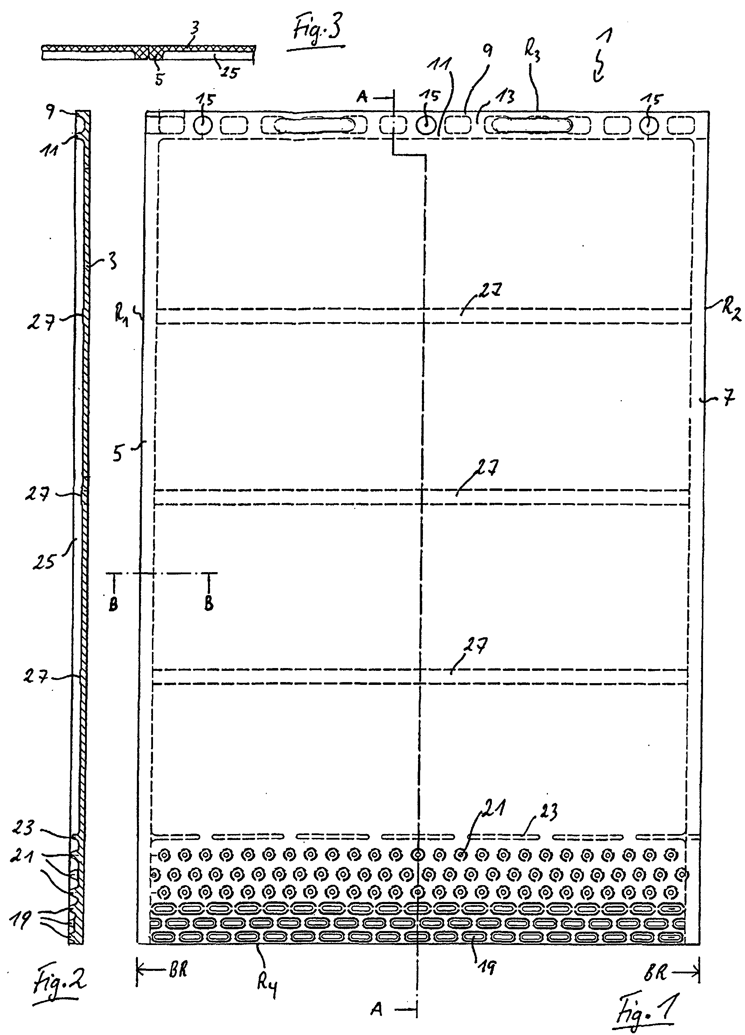

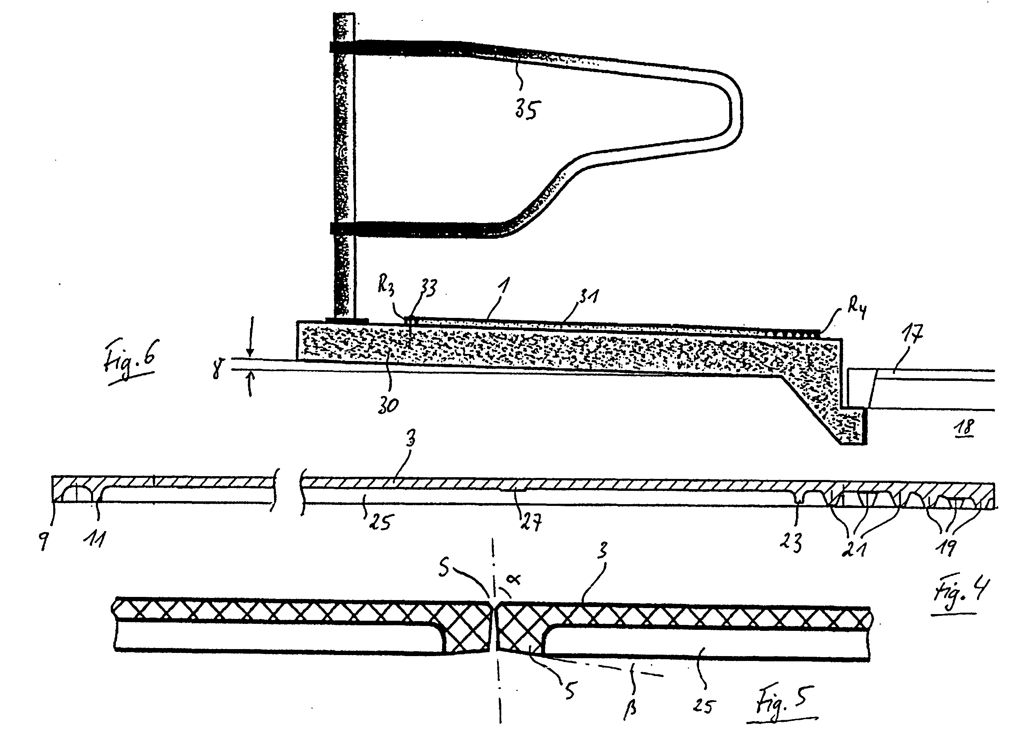

In Fig. 6 ist mit 35 ein Trennbügel zur seitlichen Abgrenzung einer Stallbox, hier für eine einzige Milchkuh, bezeichnet. Die Breite BR-BR (Fig. 1) der Matte entspricht dem Teilungsraster der Trennbügel 35 einer Boxenreihe, so daß in der Boxenreihe die Matten mit ihren Längsrändern R₁,R₂ entlang einer Stoßfuge S aneinanderstoßen, wie in Fig. 5 gezeigt. Das Format der Matte ist dem Format einer Box angepaßt oder entspricht einem kleinen ganzzahligen Vielfachen davon. Die als Plattenware gestapelt gelieferten Matten sind - für jeweils eine Box - typischerweise 1 - 2 m breit und 1,5 - 2,5 m lang, hier für eine Milchkuh ca 1,2 m breit und 1,8 m lang. Die Dicke der Bodenmatte beträgt ca. 1 - 5 cm, hier ca. 3 cm einschließlich der Rippen und Füße. Bevorzugt werden die Matten so montiert, daß ihre Längsränder R₁,R₂ unter den Trennbügeln 35 mit diesen fluchten.

Die Gummimatte 1 ist flächig geschlossen, bis auf die Befestigungslöcher 15 im wesentlichen perforationsfrei und oberseitig rutschsicher profiliert, wobei die Profilerhebungen zwischen sich Kanäle freilassen, durch die Flüssigkeiten ablaufen können. Sie bildet eine bequeme, temperaturisolierte Liege- oder Standfläche für das Tier.

Die Gummimatte 1 besteht hier zu etwa 90 % aus Altgummiteilchen, gebunden mit härtbarem Material wie Epoxy- oder Polyurethanharz, oder thermoplastischem Material wie Polypropylen oder Polyethylen, oder vulkanisiert mit Vulkanisierhilfsmittel enthaltendem Rohgummi, ohne zusätzliche Gewebeverstärkung mit einer Shore-Härte von etwa 65. Die Schaumstoffplatte 31 ist hier unter Verwendung von Polyurethanschaum hergestellt, oder einem Verbund aus mit Polyrethankleber verpreßten Altschaumstoffflocken, wobei sich je nach Preßdruck eine unterschiedliche Schaumstoffhärte erzielen läßt. Die Schaumstoffplatte kann ganz oder vollständig durch eigene Hautbildung oder durch eine separate Folie umhüllt sein.

## Patentansprüche

1. Gummielastische Bodenmatte für einen Viehstall, insbesondere zum Auslegen von Liegeboxen,
**dadurch gekennzeichnet,**
**daß** entlang zumindest einem der Seitenränder (R₁₋₄) der Matte (1) eine nach unten weisende Steganordnung (5,7;11,13;19,21) einstückig angeformt oder fest angebracht ist, die unter der Matte (1) einen im wesentlichen flächig durchgehenden, nach unten offenen Hohlraum (25) seitlich begrenzt.

2. Bodenmatte nach Anspruch 1,
**dadurch gekennzeichnet,**
**daß** die Steganordnung mehrere, nebeneinander entlang dem zumindest einen Seitenrand (R₄) verlaufende Stegunteranordungen (19,21) aufweist.

3. Bodenmatte nach Anspruch 2,
**dadurch gekennzeichnet,**
**daß** die vertikale Druckstabilität der Stegunteranordnungen (19,21) vom zugehörigen Seitenrand (R₄) der Matte (1) ausgehend stetig oder gestuft abnimmt.

4. Bodenmatte nach Anspruch 3,
**dadurch gekennzeichnet,**
**daß** die dem Seitenrand (R₄) näheren Stegunteranordnungen (19) einen größeren Flächenanteil der Matte (1) belegen als die vom Seitenrand ferneren Stegunteranordnungen (21).

5. Bodenmatte nach einem der vorhergehenden Ansprüche,
**dadurch gekennzeichnet,**
**daß** die Steganordnung in eine Vielzahl auf einer Linie mit Abstand voneinander angeordneter Füße (19,21) unterteilt ist.

6. Bodenmatte nach einem der Ansprüche 2 - 5,
**dadurch gekennzeichnet,**
**daß** die Stegunteranordnungen (19,21) jeweils eine Reihe mit Abstand voneinander angeordneter Füße (19,21) bilden, die zu den Füßen der benachbarten Reihe in Reihenlängsrichtung zueinander versetzt sind.

7. Bodenmatte nach Anspruch 6,
**dadurch gekennzeichnet,**
**daß** die zueinander versetzten Füße (19,21) benachbarter Reihen vom Seitenrand der Matte betrachtet einander zumindest teilweise überlappen.

8. Bodenmatte nach Anspruch 1,
**dadurch gekennzeichnet,**
**daß** die zumindest eine Steganordnung (5,7;11,13) als durchgehende Rippe ausgebildet ist.

9. Bodenmatte nach Anspruch 8,
**dadurch gekennzeichnet,**
**daß** die Rippe (5,7) - in einem zu ihrer Längserstreckung orthogonalen Schnitt betrachtet - an ihrer vom Hohlraum (25) abgelegenen Seite von oben gesehen hinterschnitten ist.

10. Bodenmatte nach einem der vorhergehenden Ansprüche,
**dadurch gekennzeichnet,**
**daß** sie im wesentlichen rechteckig ist und an allen ihren Seitenrändern die Steganordnungen (5,7;11,13;19,21) trägt, um den darunter gebildeten Hohlraum (25) allseits seitlich zu umrahmen.

11. Bodenmatte nach einem der vorhergehenden Ansprüche,
**dadurch gekennzeichnet,**
**daß** die Unterfläche der Bodenmatte (1) zwischen den Steganordnungen (5,7) entgegengesetzter Seitenränder (R₁,R₂) der Bodenmatte (1) verlaufende Verstärkungsrippen (27) trägt.

12. Bodenmatte nach Anspruch 11,
**dadurch gekennzeichnet,**
**daß** die Verstärkungsrippen (27) weniger weit von der Unterfläche der Bodenmatte (1) abstehen als die Steganordnungen (5,7;11,13;19,21).

13. Bodenmatte nach Anspruch 1,
**dadurch gekennzeichnet,**
**daß** sie zum Auslegen eines ein Gefälle *γ* aufweisenden Stallbodens (30) an ihrem im Gefälle unteren Seitenrand (R₄) nach einem der Ansprüche 2 - 7 ausgestaltet ist und an ihren verbleibenden Seitenrändern nach einem der Ansprüche 8 oder 9.

14. Bodenmatte nach Anspruch 13,
**dadurch gekennzeichnet,**
**daß** sie nahe ihrem im Gefälle oberen Randbereich (R₃) Mittel (15) zum Befestigen am Stallboden (30) aufweist.

15. Bodenmatte nach einem der vorhergehenden Ansprüche,
**dadurch gekennzeichnet,**
**daß** sie einstückig unter Verwendung von Altgummiteilchen hergestellt ist, welche durch erhärtetes Bindemittel miteinander verbunden sind, z.B. unter Zugabe von Rohgummimaterial.

16. Bodenmatte nach einem der vorhergehenden Ansprüche,
**dadurch gekennzeichnet,**
**daß** der Hohlraum (25) mit einer, insbesondere von der Bodenmatte (1) separat zu verlegenden weichen Schicht (31) gefüllt ist, die weicher ist als das Material der Bodenmatte (1).

17. Bodenmatte nach Anspruch 16,
**dadurch gekennzeichnet,**
**daß** die weiche Schicht (31) aus offenporigem, gegebenenfalls ganz oder vollständig umhülltem Schaumstoff hergestellt ist.

18. Bodenmatte nach Anspruch 17,
**dadurch gekennzeichnet,**
**daß** der Schaumstoff (31) aus mit Bindemittel gebundenen Altschaumstoffflocken hergestellt ist.

19. Bodenmatte nach einem der Ansprüche 16 - 18,
**dadurch gekennzeichnet,**
**daß** die weiche Schicht (31) im entspannten Zustand höher ist als der Betrag, um den die Steganordnungen (5,7;11,13;19,21) von der Unterfläche der Bodenmatte (1) abstehen.

20. Viehstallkonstruktion mit einer Vielzahl durch Trennelemente (35) unterteilter, nebeneinander aufgereihter Stallboxen, auf deren Böden (30) gummielastische Bodenmatten (1), nach einem der Ansprüche 1 - 19, aufliegen,
wobei die Breite (BR-BR) jeder Bodenmatte (1) dem Teilungsraster der Trennelemente (35) in der Boxenreihe oder einem kleinen ganzzahligen Vielfachen davon entspricht.

21. Viehstallkonstruktion nach Anspruch 20,
**dadurch gekennzeichnet, daß** Stoßfugen (S) aneinanderliegender Bodenmatten (1) jeweils in Flucht mit den Trennelementen (35) verlaufen.

22. Verwendung einer Bodenmatte (1) nach einem der Ansprüche 1 - 19 zum Auslegen eines Stallbodens (30).

## Claims

1. Rubber-elastic floor mat for a cowshed, in particular for use in loose boxes, **characterised in that** a downwardly directed web construction (5, 7; 11, 13; 19, 21) is integral with or securely provided along at least one of the side edges (R₁₋₄) of the mat (1), the web construction laterally defining below the mat (1) a substantially planar, continuous cavity (25) which is open in the downward direction.

2. Floor mat according to claim 1, **characterised in that** the web construction comprises a plurality of web sub-constructions (19, 21) extending side by side along the at least one side edge (R₄).

3. Floor mat according to claim 2, **characterised in that** the vertical compressive stability of the web sub-constructions (19, 21) decreases continuously or gradually from the associated side edge (R₄) of the mat (1).

4. Floor mat according to claim 3, **characterised in that** the web sub-constructions (19) which are closer to the side edge (R₄) cover a larger area of the mat (1) than the web sub-constructions (21) which are more remote from the side edge.

5. Floor mat according to any of the preceding claims, **characterised in that** the web construction is subdivided into a plurality of feet (19, 21) arranged in a line with mutual spacing.

6. Floor mat according to any of claims 2 to 5, **characterised in that** the web sub-constructions (19, 21) form a respective row of feet (19, 21) arranged with mutual spacing and which are mutually offset with respect to the feet of the neighbouring row in the longitudinal row direction.

7. Floor mat according to claim 6, **characterised in that** the mutually offset feet (19, 21) of neighbouring rows at least partially overlap each other when viewed from the side edge of the mat.

8. Floor mat according to claim 1, **characterised in that** the at least one web construction (5, 7; 11, 13) is designed as a continuous rib.

9. Floor mat according to claim 8, **characterised in that** the rib (5, 7), when viewed in a section orthogonal with respect to its longitudinal extent, is, when viewed from above, undercut at the side thereof remote from the cavity (25).

10. Floor mat according to any of the preceding claims, **characterised in that** it is substantially rectangular and carries on all its side edges the web constructions (5, 7; 11, 13; 19, 21) so as to laterally frame on all sides the cavity (25) formed therebelow.

11. Floor mat according to any of the preceding claims, **characterised in that** the lower face of the floor mat (1) carries reinforcing ribs (27) extending between the web constructions (5, 7) of opposite side edges (R₁, R₂) of the floor mat (1).

12. Floor mat according to claim 11, **characterised in that** the reinforcing ribs (27) project from the lower face of the floor mat (1) less than the web constructions (5, 7; 11, 13; 19, 21).

13. Floor mat according to claim 1, **characterised in that**, for covering a cowshed floor (30) having a slope , the floor mat is designed at its lower side edge (R₄) within the slope according to any of claims 2 to 7, and at its remaining side edges according to either of claims 8 or 9.

14. Floor mat according to claim 13, **characterised in that** close to the upper edge region (R₃) within the slope, means (15) for fastening the mat to the cowshed floor (30) are provided.

15. Floor mat according to any of the preceding claims, **characterised in that** the floor mat is made in one piece by using waste rubber particles joined together by hardened bonding agent, for example by the addition of raw rubber material.

16. Floor mat according to any of the preceding claims, **characterised in that** the cavity (25) is filled with a soft layer (31), in particular to be laid separately from the floor mat (1), the layer being softer than the material of the floor mat (1).

17. Floor mat according to claim 16, **characterised in that** the soft layer (31) is made from open-pored, optionally completely or entirely enclosed foam material.

18. Floor mat according to claim 17, **characterised in that** the foam material (31) is made from waste foam material flakes joined by bonding agents.

19. Floor mat according to any of claims 16 to 18, **characterised in that** the soft layer (31) is higher in its relaxed state than the amount by which the web constructions (5, 7; 11, 13; 19, 21) project from the lower face of the floor mat (1).

20. Cowshed construction comprising a plurality of loose boxes aligned side by side and subdivided by separating elements (35), rubber-elastic floor mats (1) according to any of claims 1 to 19 being laid on the floors (30) of said loose boxes, the width (BR-BR) of each floor mat (1) corresponding to the partition grid of the separating elements (35) in the row of boxes or to a small integral multiple thereof.

21. Cowshed construction according to claim 20, **characterised in that** butt joints (S) of adjacent floor mats (1) each extend flush with the separating elements (35).

22. Use of a floor mat (1) according to any of claims 1 to 19 for covering a cowshed floor (30).

## Revendications

1. Tapis de sol en gomme élastique destiné à une étable, en particulier comme garniture de boxes,
**caractérisé en ce que**
le long d'au moins l'un des bords latéraux (R₁₋₄) du tapis (1) est formé d'une seule pièce ou monté fixement un dispositif formant nervures (5, 7 ; 11, 13 ; 19, 21), orienté vers le bas, qui délimite latéralement, sous le tapis (1), un espace creux (25) ouvert vers le bas, sensiblement plan et continu.

2. Tapis de sol selon la revendication 1,
**caractérisé en ce que** le dispositif formant nervures comprend plusieurs dispositifs secondaires formant nervures (19, 21) s'étendant les uns à côté des autres le long du bord latéral (R₄), au nombre minimum d'un.

3. Tapis de sol selon la revendication 2,
**caractérisé en ce que** la stabilité à la compression verticale des dispositifs secondaires formant nervures (19, 21) diminue de façon constante ou par paliers, à partir du bord latéral correspondant (R₄) du tapis (1).

4. Tapis de sol selon la revendication 3,
**caractérisé en ce que** les dispositifs secondaires formant nervures (19) qui sont les plus proches du bord latéral (R₄) occupent une portion de surface de tapis (1) plus importante que les dispositifs secondaires formant nervures (21) qui sont plus éloignés du bord latéral.

5. Tapis de sol selon l'une des revendications précédentes,
**caractérisé en ce que** le dispositif formant nervures est divisé en une pluralité de pieds (19, 21) disposés sur une ligne et à distance les uns des autres.

6. Tapis de sol selon l'une des revendications 2 à 5,
**caractérisé en ce que** les dispositifs secondaires formant nervures (19, 21) forment chacun une rangée de pieds (19, 21) disposés à distance les uns des autres, qui sont décalés, dans la direction longitudinale de la rangée, par rapport aux pieds de la rangée adjacente.

7. Tapis de sol selon la revendication 6,
**caractérisé en ce que** les pieds (19, 21), décalés les uns par rapport aux autres, de rangées adjacentes se chevauchent les uns les autres, au moins partiellement, vus à partir du bord latéral du tapis.

8. Tapis de sol selon la revendication 1,
**caractérisé en ce que** le dispositif formant nervures (5, 7 ; 11, 13), au nombre minimum d'un, est conformé en arête continue.

9. Tapis de sol selon la revendication 8,
**caractérisé en ce que** - vue suivant une coupe perpendiculaire à sa longueur - l'arête (5, 7) est taillée en contre-dépouille, vue par dessus, sur son côté qui est éloigné de l'espace creux (25).

10. Tapis de sol selon l'une des revendications précédentes,
**caractérisé en ce qu'**il est sensiblement rectangulaire et porte le dispositif formant nervures (5, 7 ; 11, 13 ; 19, 21) sur tous ses bords latéraux, pour encadrer latéralement, de toutes parts, l'espace creux (25) formé sous lui.

11. Tapis de sol selon l'une des revendications précédentes,
**caractérisé en ce que** la surface inférieure du tapis de sol (1) porte des nervures de renforcement (27) qui s'étendent entre les dispositifs formant nervures (5, 7) de bords latéraux opposés (R₁, R₂) du tapis de sol (1).

12. Tapis de sol selon la revendication 11,
**caractérisé en ce que** les nervures de renforcement (27) dépassent moins de la surface inférieure du tapis de sol (1) que les dispositifs formant nervures (5, 7 ; 11, 13 ; 19, 21).

13. Tapis de sol selon la revendication 1,
**caractérisé en ce que**, pour garnir le sol d'une étable (30) présentant une pente y, il est conçu, au niveau de son bord latéral (R₄), situé en bas de la pente, selon l'une des revendications 2 à 7 et, au niveau de ses bords latéraux restants, selon l'une des revendications 8 ou 9.

14. Tapis de sol selon la revendication 13,
**caractérisé en ce qu'**à proximité de son bord latéral (R₃), situé en haut de la pente, il présente des moyens (15) destinés à sa fixation sur le sol de l'étable (30).

15. Tapis de sol selon l'une des revendications précédentes,
**caractérisé en ce qu'**il est fabriqué en une seule pièce, en utilisant des particules de caoutchouc de récupération, solidarisées grâce à un liant durci, par exemple par addition de caoutchouc brut.

16. Tapis de sol selon l'une des revendications précédentes,
**caractérisé en ce que** l'espace creux (25) est rempli par une couche souple (31), destinée en particulier à être posée séparément du tapis de sol (1), couche qui est plus souple que le matériau qui compose le tapis de sol (1).

17. Tapis de sol selon la revendication 16,
**caractérisé en ce que** la couche souple (31) est fabriquée en mousse à cellules ouvertes, qui est, le cas échéant, totalement ou partiellement enveloppée.

18. Tapis de sol selon la revendication 17,
**caractérisé en ce que** la mousse (31) est fabriquée à partir de flocons de mousse de récupération, solidarisés par du liant.

19. Tapis de sol selon l'une des revendications 16 à 18,
**caractérisé en ce que** la couche souple (31), à l'état relâché, est plus haute que la valeur selon laquelle les dispositifs formant nervures (5, 7 ; 11, 13 ; 19, 21) dépassent de la surface inférieure du tapis de sol(1).

20. Système pour étable comprenant une pluralité de boxes séparés par des éléments de séparation (35) et disposés les uns à côté des autres, sur les sols (30) desquels sont disposés des tapis de sol (1) en gomme élastique selon l'une des revendications 1 à 19,
la largeur (BR-BR) de chaque tapis de sol (1) correspondant à la valeur d'écartement des éléments de séparation (35) dans la série de boxes, ou à un petit multiple entier de cette valeur.

21. Système pour étable selon la revendication 20,
**caractérisé en ce que** les joints (S) de tapis de sol (1) adjacents sont chacun alignés avec les éléments de séparation (35).

22. Utilisation d'un tapis de sol (1) selon l'une des revendications 1 à 19, comme garniture du sol d'une étable (30).
